# EUROPEAN PATENT APPLICATION

(11) **EP 2 394 899 A2**
(43) Date of publication of application: **14.12.2011**
(21) Application number: 11004705.7
(22) Date of filing: 09.06.2011
(51) Int. Cl.: B62M 1/04

(54) **Device for bicycles or other pedal-powered vehicles**

(30) Priority: 11.06.2010 PT 10516110
(71) Applicant: Ferreira, Marinho, José, Manuel, 4610-409 Lagares FLG (PT)
(72) Inventor: Ferreira, Marinho, José, Manuel, 4610-409 Lagares FLG (PT)
(74) Representative: Pelayo de Sousa Henriques, Rui

(57) **Abstract**

The present invention relates to a device for equipping a bicycle or other pedal vehicles, characterized in that it has a crank which has a rotation lower than 180°, being that this crank in one end is equipped with a box and on the other is equipped with a pedal, and the box houses a unidirectional bearing which drives a shaft which, directly or indirectly, operates the chainring, in that this device has a spring (15) that, each time the pedal is actuated, forces the crank to return to starting position and in that a conventional pedal vehicle may be provided with one or two of these devices.

## Description

### TECHNICAL FIELD

The present invention relates to a simple and robust device to equip bicycles manufactured from origin or other pedal vehicles - being able, through an adjustment, to be attached to existing vehicles pedals - so that they can be put into movement operating one or two pedals, without requiring a particular skill or balance and/or force out of the ordinary from the user.

Instead, the bicycle is equipped with a mechanism operating smoothly and easily that does not require special skills.

It can be used by anyone and is of particular interest to people with physical disabilities in one leg, namely by amputation.

### STATE OF THE ART

There are known mechanisms to solve the "dead point region", as is the case of Brazilian patent no. PI8403138-7, but it is unknown the existence of a device with the functional characteristics of this invention that not only allows a more efficient way to solve that problem, but also takes advantage of a crank or a pedal crank bar with a length substantially greater than usual.

Given that, according to the present invention, the crank where one of the pedals is attached do not rotate 360° and never makes an angle of 0° with the vertical, contrary to what is traditional, its length is not subjected to the distance from its axis of rotation to the ground and by the necessary gap that the pedal must also have in regard to the ground.

On the other hand, the longer the crank, or arm, the lower is the effort that the user has to do, especially significant at starting-up.

The invented device is simple, robust and simultaneously comfortable, because it is possible to achieve a very smooth progression with great ease and naturalness.

Unlike what happens in the invention described in Brazilian patent, this device is not equipped with a bar set or clamp, a mechanism that presents not only the inconvenience of using several joints, which are always subject to breakdown points, such as the disadvantage of causing a remarkable obstruction in a area that should be left free.

These and other advantages are described below in more detail.

### DESCRIPTION OF THE INVENTION

As already mentioned, the invention relates to a device for equipping a bicycle or other pedal vehicles, characterized in that it has a crank which has a rotation lower than 180°, being that this crank in one end is equipped with a box and on the other is equipped with a pedal, and the box houses a unidirectional bearing which drives a shaft which, directly or indirectly, operates the chainring, in that this device has a spring that, each time the pedal is actuated, forces the crank to return to starting position and in that a conventional pedal vehicle may be provided with one or two of these devices.

Preferably, this device must be mounted so that the shaft driven by the crank occupies a position ahead that one which the shaft of the chainring occupies in a traditional bicycle.

This position, ahead, should preferably be of the order of 15 cm.

As is clear from the above, the invented device is simple and the user, using a single pedal with an essentially perpendicular strength to the ground and in the downward direction causes the vehicle to move easily.

The figures that are an integral part of this description show a rough prototype, and the invention can be carried out using materials with a good weight/resistance relation and a size that minimizes the obstruction, this aspect has not been given attention in the prototype developed.

### DESCRIPTION OF THE FIGURES

In the attached figures, given by way of example and not limiting, can be observed:

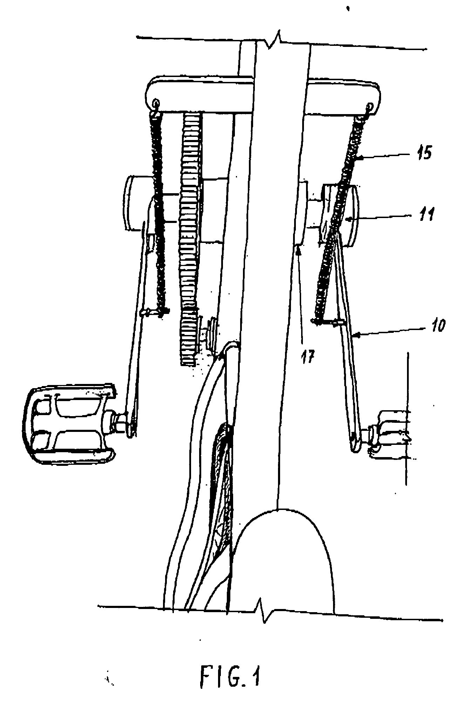

in figure 1, a perspective view from above of two of the invented devices mounted on a bicycle, being visible in each one of them the crank and in their ends a pedal and a box that houses a unidirectional bearing. It is also apparent the shaft rotated by the pedals drive. This movement is transmitted to a toothed wheel joined to this shaft, a wheel which in turn is mesh with other toothed wheel that transmits the movement to the shaft of the chainring. The figure also shows a coil spring per device that functions in order to force the respective crank to return to the starting position;

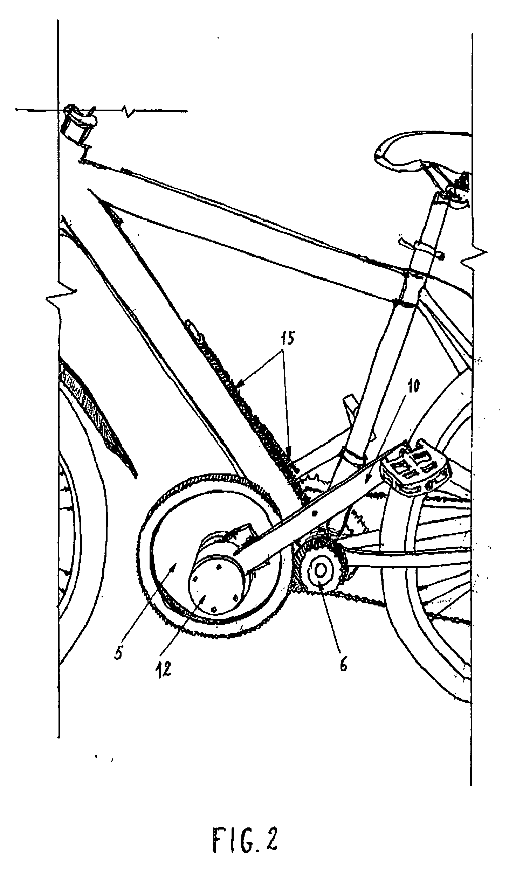

in figure 2, a side view of one of the devices represented in the previous figure, noting that, contrary to what happens in a traditional bicycle in which the crank rotates 360° and with it the pedal, in this represented device the crank has a movement lower than 90°., the pedal movement is very close to a repetitive vertical movement of the type down, up, down, up, etc..

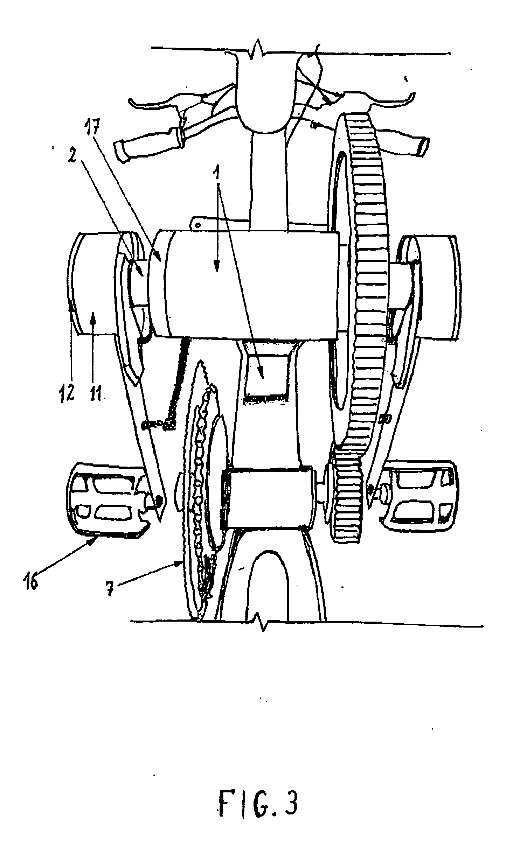

in figure 3, a top view of the devices shown in figure 1, with the bike represented "upside down", being visible the structure that supports and houses the shaft common to both devices, the toothed wheel of this shaft, the toothed wheel that engages in the toothed wheel of the shaft of the device and transmits the movement to the shaft of the chainring, and it is still visible the pedals and boxes that are positioned at the ends of the two cranks and the spring that forces one of the cranks to return to starting position.

In particular, the mentioned figures show:
- 1 -: structure of the shaft of the device
- 2 -: shaft of the device
- 5 -: toothed wheel of the shaft of the device
- 6 -: transmission toothed wheel of the movement
- 7 -: chainring
- 10 -: crank
- 11 -: crank box provided with a unidirectional bearing
- 12 -: box lid
- 15 -: return spring of the crank
- 16 -: pedal
- 17 -: disk

The force, essentially vertical, exerted on the pedal (16) operates the crank (10) and the unidirectional bearing that goes with it, turning the shaft of the device (2) and thus sets in motion the toothed wheel (5) that in turn, is meshed with the toothed wheel (6) that, finally, transmits the movement to the shaft of the chainring (7).

Still according to this prototype, the shaft of the device (2) is unable to get free from the structure (1) by action of the wheel (5) and disk (17) which are solidly attached to it (2).

The unidirectional bearing must fit inside the box and this, before being closed with the lid (12), is threaded into the shaft (2) to which it is applied, later, a pressure spring that prevents the set (box and bearing) from being released from the shaft (2).

Subsequently, the lid (12) is applied into the box (11) protecting the bearing and preventing the box from sliding towards the centre of the shaft of the device (2).

The invented device must be mounted in any pedal vehicle considering the appropriate gaps depending on the materials used and other current issues.

On the other hand, the return spring of the crank (15) can be helical, as used in the developed prototype, or can preferably be a torsion spring applied on the shaft of the device (2).

Unlike what happens in the traditional bicycles, where cranks have a length of about 19 cm, the cranks that equip the developed prototype have a length of 25 cm.

Then, being the largest arm, the lower the force applied to put the bike in motion.

## Claims

1. Device for equipping a bicycle or other pedal vehicles, **characterized in that** it has a crank (1C) which has a rotation movement lower than 180°, being that this crank in one end is equipped with a box (11) and on the other is equipped with a pedal (16), and the box houses a unidirectional bearing which drives a shaft (2) which, directly or indirectly, operates the chainring, **in that** this device has a spring (15) that, each time the pedal is actuated, forces the crank to return to starting position and **in that** a conventional pedal vehicle may be provided with one or two of these devices.

2. Device according to the previous claim, **characterized in that** the shaft (2) driven by the crank is positioned ahead the shaft of the chainring.

3. Device according to the previous claim, **characterized in that** the distance, measured horizontally, between the shaft operated by the crank and the shaft of the chainring, is between 10 cm to 20 cm.

4. Device according to claim 1, **characterized in that** the spring (15) is of torsion applied into the shaft of the device (2).

5. Device according to claim 1, **characterized in that** the spring (15) is helical.

6. Device according to claim 1, **characterized in that** the crank (10) has a length of 25 cm, admitting a variation of more or less 1 cm.
